# EUROPEAN PATENT APPLICATION

(11) **EP 4 640 411 A1**
(43) Date of publication of application: **29.10.2025**
(21) Application number: 24172238.8
(22) Date of filing: 24.04.2024
(51) Int. Cl.: B29C 70/44, B29C 65/70, B29C 70/68, B29C 70/76, B64C 5/02, B64C 27/04, B29C 65/00, B29D 99/00, B29C 65/48

(54) **A METHOD OF MANUFACTURING A FIBER REINFORCED COMPOSITE COMPONENT**

(71) Applicant: AIRBUS HELICOPTERS DEUTSCHLAND GmbH, 86609 Donauwörth (DE)
(72) Inventor: JOACHIM, Thomas, 86156 AUGSBURG (DE); OTTO, Hans, 86641 RAIN AM LECH (DE); SAUER, Jochen, 86650 WEMDING (DE); WUERFL, Thomas, 80995 MÜNCHEN (DE)
(74) Representative: GPI Brevets

(57) **Abstract**

The invention relates to a method of manufacturing a fiber reinforced composite component. The method comprises providing a pre-cured fiber reinforced composite support structure (13) which comprises a flat area (14c) that merges at at least one associated transition area (14d) into at least one annexed curved area (14a), wherein the at least one associated transition area (14d) comprises at least one slot (15a, 15b) adapted to provide bending flexibility to the at least one transition area (14d); providing at least one uncured fiber reinforced composite element; and joining the at least one uncured fiber reinforced composite element to the pre-cured fiber reinforced composite support structure (13) by means of a co-bonding process.

## Description

The invention is related to a method of manufacturing a fiber reinforced composite component, in particular for use in aeronautical applications. The invention is further related to a horizontal stabilizer of a rotorcraft, which comprises such a fiber reinforced composite component, and to a rotorcraft that comprises such a horizontal stabilizer.

A horizontal stabilizer is generally foreseen on a rotorcraft, such as a helicopter, to control the equilibrium of moments around the helicopter's pitch axis. The horizontal stabilizer may be installed somewhere on the helicopter's tail boom or, alternatively, on top of a vertical fin of the helicopter. In the latter case, the horizontal stabilizer is sometimes also referred to as "T-tail horizontal stabilizer". Such T-tail horizontal stabilizers may be provided as metallic or composite-metallic riveted structures, or they may be manufactured using composite materials.

Manufacturing composite material components of aircrafts in general is well-known in the prior art. For instance, document EP 3 970 955 A1 describes net shape forming of composite stringers using a tool that is configured to form a composite charge into a stringer having a net shape with at least one out-of-plane feature. The out-of-plane feature is formed by a shim removably attached to the tool. A tool for forming contoured composite stringers having reduced wrinkling is described in document US 11 760 040 B2. Furthermore, an apparatus and a method to tailor fiber distortion in composite parts are described in document EP 3 693 155 A1. Moreover, document EP 4 197 771 A1 describes forming of a composite charge between two compression dies into a composite laminate stiffener. The stiffener is contoured along its length axis by contouring the dies. Document EP 3 162 544 A1, in turn, describes fabricating of a contoured composite laminate stiffener by assembling a substantially flat composite laminate charge and forming the charge into a substantially straight stiffener having a desired cross-sectional shape. However, these tools and methods are not suitable for manufacturing a fiber reinforced composite component that is a fully bonded one-shot composite component and suitable for use as a T-tail horizontal stabilizer of a helicopter.

It is, therefore, an object of the present invention to provide a new method of manufacturing a fiber reinforced composite component, in particular a fully bonded one-shot composite component which is suitable for use as a T-tail horizontal stabilizer of a helicopter.

The above-described object is solved by a method of manufacturing a fiber reinforced composite component comprising the features of claim 1. More specifically, the method comprises providing a pre-cured fiber reinforced composite support structure; providing at least one uncured fiber reinforced composite element; and joining the at least one uncured fiber reinforced composite element to the pre-cured fiber reinforced composite support structure by means of a co-bonding process. The pre-cured fiber reinforced composite support structure comprises a flat area that merges at at least one associated transition area into at least one annexed curved area, wherein the at least one associated transition area comprises at least one slot adapted to provide bending flexibility to the at least one transition area.

Advantageously, the inventive method of manufacturing a fiber reinforced composite component enables the positioning and joining of so-called pre-preg elements which are to be cured, i. e. uncured fiber reinforced composite elements, on pre-cured curved elements, i. e. pre-cured fiber reinforced composite elements, by means of co-bonding, where tooling thermal expansion consideration would normally not allow such a joining. The term "co-bonding" refers to joining at least one uncured fiber reinforced composite element to at least one cured fiber reinforced composite element by means of curing the elements together in order to obtain a bond joint.

In an illustrative realization, a pre-cured fiber reinforced composite support structure, i. e., a pre-cured resin transfer molded (hereinafter "RTM") element, may be provided with inner load carrying structures (i. e., spars and ribs). The pre-cured RTM element is provided for being joined by means of a co-bonding process on stabilizer air foil skin surfaces which are to be cured using blow molding in a closed steel tooling. The pre-cured RTM element preferably comprises at its outer ends winglet structures which are bended, e. g. downwards, and, thus, form out-of-plane shapes. However, such out-of-plane shapes formed by the winglets would normally prevent use of a co-bonding process for joining the stabilizer air foil skin surfaces which are to be cured with the pre-cured RTM element, as thermal expansion of a respectively used tooling would create bending loads and stresses on the actually stiff and curved pre-cured RTM element while expanding towards curing temperature.

Therefore, a temporary flexible section is provided according to the present invention in the actually stiff and curved pre-cured RTM element to enable its positioning and laminating until the curing phase. During hardening of the stabilizer air foil skin surfaces which are to be cured and surround the temporary flexible section, when maximum thermal tool extension is reached, the flexibility of the temporary flexible section disappears and the pre-cured RTM element, then, provides the desired stiffness.

It should be noted that the illustrative realization described above relates to a method of manufacturing a horizontal stabilizer having winglets which are bended downwards at the outer ends of the horizontal stabilizer. However, the inventive method is likewise applicable to manufacturing of any other complex shaped fiber reinforced composite structure using a co-bonding process. More specifically, the inventive method generally requires provision of a pre-cured fiber reinforced composite structure, such as a carbon fiber reinforced polymer (CFRP) structure, having local cut-outs in a section which would normally prevent or block thermal tooling expansion in a suitable assembly tool, such as a blow molding tool. The section with the cut-outs is suitable to provide flexibility of the CFRP structure for enabling thermal tooling expansion as well as provision of an additional stiff but flexible wall for positioning plies in the middle of the blow molding tool. Furthermore, self-disassembling of the blow molding tool is advantageously enabled. If desired, the method may be applied to all comparatively long CFRP structures having one or more curved shaped ends.

According to some aspects, the pre-cured fiber reinforced composite support structure forms a load carrying structure of a horizontal stabilizer of a rotorcraft.

Preferably, the pre-cured fiber reinforced composite support structure comprises a plurality of spars and a plurality of ribs. The at least one slot may be formed in at least one of the plurality of spars.

Preferably, the at least one uncured fiber reinforced composite element forms at least a portion of an outer skin of the horizontal stabilizer.

According to some aspects, joining the at least one uncured fiber reinforced composite element to the pre-cured fiber reinforced composite support structure by means of the co-bonding process comprises: providing a blow molding tool; positioning the at least one uncured fiber reinforced composite element in the blow molding tool; positioning the pre-cured fiber reinforced composite support structure in the blow molding tool; and heating the blow molding tool for curing the pre-cured fiber reinforced composite support structure and the at least one uncured fiber reinforced composite element in the blow molding tool.

Preferably, providing the blow molding tool comprises providing a first tool half with a first cavity and a second tool half with a second cavity.

Preferably, positioning the at least one uncured fiber reinforced composite element in the blow molding tool comprises positioning the at least one uncured fiber reinforced composite element in the first cavity of the first tool half.

Preferably, positioning the pre-cured fiber reinforced composite support structure in the blow molding tool comprises positioning the pre-cured fiber reinforced composite support structure in the second cavity of the second tool half.

Preferably, positioning the at least one uncured fiber reinforced composite element in the first cavity of the first tool half comprises lining the at least one uncured fiber reinforced composite element with wet fiber layers.

According to some aspects, positioning the pre-cured fiber reinforced composite support structure in the second cavity of the second tool half comprises: providing at least one additional uncured fiber reinforced composite element; positioning the at least one additional uncured fiber reinforced composite element in the second cavity of the second tool half; and positioning the pre-cured fiber reinforced composite support structure on the at least one additional uncured fiber reinforced composite element in the second cavity of the second tool half.

Preferably, positioning the at least one additional uncured fiber reinforced composite element in the second cavity of the second tool half comprises lining the at least one additional uncured fiber reinforced composite element with additional wet fiber layers.

According to some aspects, positioning the pre-cured fiber reinforced composite support structure in the blow molding tool comprises covering the at least one slot of the at least one associated transition area of the pre-cured fiber reinforced composite support structure with wet covering fiber layers.

According to some aspects, positioning the pre-cured fiber reinforced composite support structure on the at least one additional uncured fiber reinforced composite element in the second cavity of the second tool half comprises fixing position of the pre-cured fiber reinforced composite support structure in the second cavity using a plurality of positioning pins; and positioning inflatable blow tubes in tube spaces created by the pre-cured fiber reinforced composite support structure in the blow molding tool.

Preferably, providing the pre-cured fiber reinforced composite support structure comprises providing the flat area with a plurality of long holes for engagement with the plurality of positioning pins such that movement of the plurality of positioning pins in the plurality of long holes relative to the pre-cured fiber reinforced composite support structure during the co-bonding process is enabled.

According to some aspects, the at least one additional uncured fiber reinforced composite element forms at least another portion of the outer skin of the horizontal stabilizer.

According to some aspects, the at least one annexed curved area forms at least one winglet of the horizontal stabilizer.

The present invention further provides a horizontal stabilizer of a rotorcraft, the horizontal stabilizer comprising the features of claim 13. More specifically, according to the present invention a horizontal stabilizer of a rotorcraft comprises a fiber reinforced composite support structure and a fiber reinforced composite element. The fiber reinforced composite support structure comprises a flat area that merges at at least one associated transition area into at least one annexed curved area. The at least one associated transition area comprises at least one slot. The fiber reinforced composite element forms an outer skin that envelops the fiber reinforced composite support structure.

According to some aspects, the horizontal stabilizer is manufactured using the method as described above.

The present invention further provides a rotorcraft with a horizontal stabilizer which is manufactured using the method as described above.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 is a lateral view of an illustrative rotorcraft that comprises a horizontal stabilizer manufactured using a method of manufacturing a fiber reinforced composite component according to the present invention,
- Figure 2 is a perspective view of the horizontal stabilizer of Figure 1,
- Figure 3 is a top view of the horizontal stabilizer of Figure 1 and Figure 2,
- Figure 4 is a perspective view of a pre-cured fiber reinforced composite support structure of the horizontal stabilizer of Figure 1 to Figure 3,
- Figure 5 is an enlarged front view of a section V of the pre-cured fiber reinforced composite support structure of Figure 3 and Figure 4,
- Figure 6 is a further enlarged view of the pre-cured fiber reinforced composite support structure of Figure 5, which is shown with a fiber reinforced stiffening layer,
- Figure 7 is a cross-sectional view of a horizontal stabilizer cut along line VIII-VIII of Figure 3, wherein the horizontal stabilizer is positioned in a blow molding tool according to a method of manufacturing a fiber reinforced composite component of the present invention,
- Figure 8 is a cross-sectional view of the horizontal stabilizer of Figure 7 which is cut along line VIII-VIII of Figure 3, after removal from the blow molding tool of Figure 7, and
- Figure 9 is an exploded cross-sectional view of the horizontal stabilizer of Figure 8.

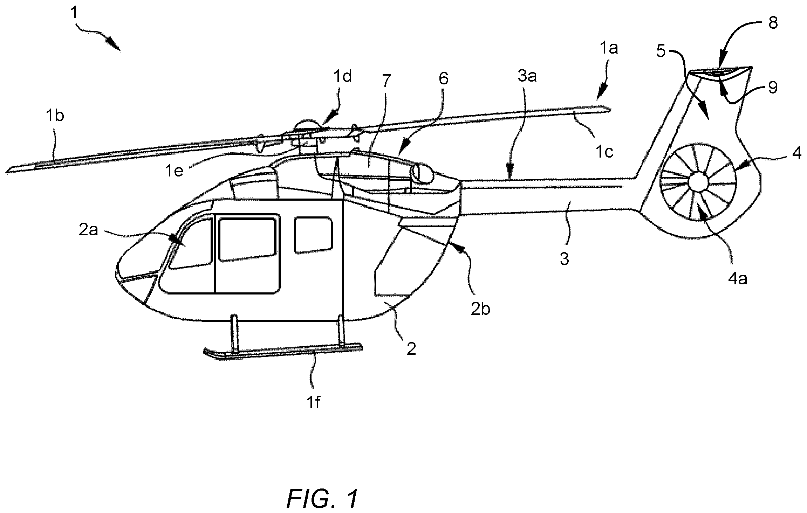

Figure 1 shows an aircraft 1 that is illustratively embodied as a rotorcraft and, more particularly, as a helicopter. Thus, for purposes of simplicity and clarity, the aircraft 1 is hereinafter referred to as the "helicopter 1". The present invention is, however, not limited to helicopters and may likewise be applied to any other rotorcraft.

The helicopter 1 comprises at least one rotor 1a, by way of example a multi-blade main rotor, for providing lift and forward or backward thrust during operation. By way of example, the at least one rotor 1a comprises a plurality of rotor blades which are connected at an associated rotor head 1d to a rotor shaft 1e, which rotates in operation of the helicopter 1 about an associated rotor axis. Two rotor blades of the plurality of rotor blades are illustratively separately labelled with the reference signs 1b, 1c.

Moreover, the helicopter 1 preferably comprises a fuselage 2 to which a landing gear 1f of the skid-type is attached. By way of example, a left-hand side of the fuselage 2 is shown and, thus, a portside wall of the fuselage 2 of the helicopter 1. Illustratively, the fuselage 2 forms an aircraft interior region that accommodates a cockpit 2a and that may further accommodate a cabin for passengers and/or cargo. Moreover, the fuselage 2 may be connected at a rear fuselage 2b to a tail boom 3. The tail boom 3 may be implemented as a slim beam element that comprises at least a tubular tail boom cone 3a.

Illustratively, the helicopter 1 further comprises at least one preferentially shrouded counter-torque device 4 configured to provide counter-torque during operation, i. e. to counter the torque created by rotation of the at least one rotor 1a for purposes of balancing the helicopter 1 in terms of yaw. The at least one counter-torque device 4 is illustratively provided at an aft section of the tail boom 3 and preferably comprises a tail rotor 4a. The aft section of the tail boom 3 may further comprise a fin 5.

Illustratively, the helicopter 1 may further comprise at least two engines 6 for powering the at least one rotor 1a. At this point, it should be noted that only a portside engine 7 is visible in Figure 1, as it is arranged on the left-hand side of the helicopter 1. However, the helicopter 1 is, by way of example, embodied with a twin-engine configuration having two engines such that the at least two engines 6 comprise in addition to the engine 7 another engine that may e. g. be arranged on a right-hand side of the helicopter 1 such that it is not visible in Figure 1.

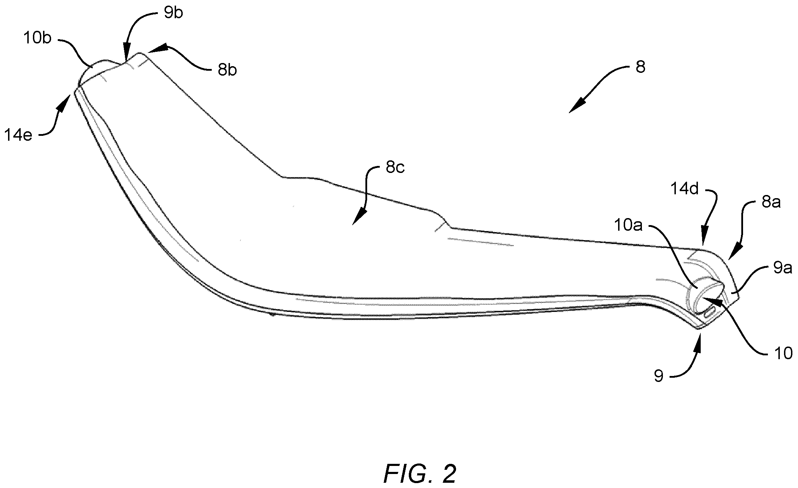

The helicopter 1 comprises a horizontal stabilizer 8, in particular a T-tail horizontal stabilizer, which is embodied according to the present invention as a fiber reinforced composite component, in partcicular a carbon fiber reinforced composite component that is manufactured as described below with reference to Figure 2 to Figure 9. By way of example, the horizontal stabilizer 8 comprises winglets 9 at its outer resp. lateral ends.

Figure 2 shows the horizontal stabilizer 8 with the winglets 9 of Figure 1. According to the present invention, the horizontal stabilizer 8 is embodied as a fiber reinforced composite component with an essential flat inner area and two adjoining outer areas with curvatures.

More specifically, the horizontal stabilizer 8 comprises by way of example a flat connection area 8c and at least one and, by way of example, two annexed curved lateral areas 8a, 8b. Illustratively, the flat connection area 8c merges at at least one and, by way of example, two associated transition areas 14d, 14e into the two annexed curved lateral areas 8a, 8b.

By way of example, the annexed curved lateral areas 8a, 8b form the winglets 9 which are bended downwards at the outer ends of the horizontal stabilizer 8. Illustratively, the winglets 9 comprise a portside winglet 9a which is arranged on the left-hand side of the helicopter 1 in Figure 1 and a starboard side winglet 9b which is arranged on the right-hand side of the helicopter 1.

If desired, the winglets 9 may comprise associated position lights 10. For instance, the portside winglet 9a may comprise a position light housing 10a to accommodate an associated position light at the portside, i. e. the left-hand side of the helicopter 1 in Figure 1, and the starboard side winglet 9b may comprise a position light housing 10b to accommodate an associated position light at the starboard side, i. e. the right-hand side of the helicopter 1.

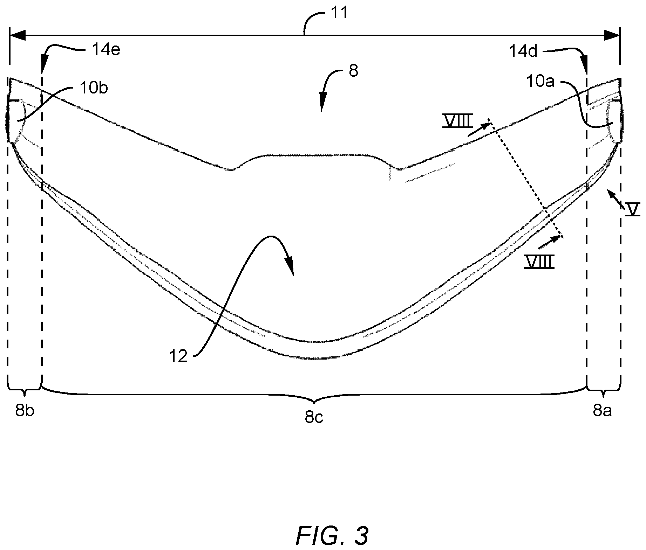

Figure 3 shows the horizontal stabilizer 8 of Figure 1 and Figure 2. Preferably, the horizontal stabilizer 8 comprises an aerodynamic outer skin 12 and extends essentially along a length direction 11. Illustratively, the horizontal stabilizer 8 is divided in the length direction 11 into the flat connection area 8c that merges at the two associated transition areas 14d, 14e into the annexed curved lateral areas 8a, 8b which comprise the position light housings 10a, 10b.

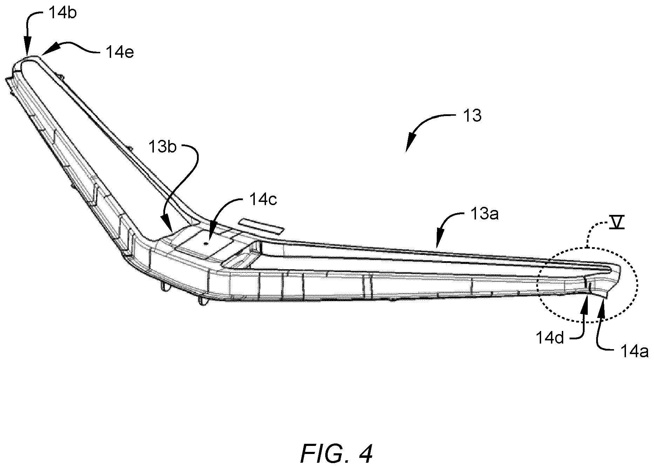

Figure 4 shows an inner support structure 13 of the horizontal stabilizer 8 of Figure 2 and Figure 3. In the horizontal stabilizer 8, the inner support structure 13 is preferably surrounded by the aerodynamic outer skin 12 of Figure 3.

More specifically, the inner support structure 13 is embodied as a fiber reinforced composite support structure which is pre-cured and provided as such for manufacturing the horizontal stabilizer 8 using a method of manufacturing a fiber reinforced composite component according to the present invention. Therefore, the inner support structure 13 may also be referred to hereinafter as the "fiber reinforced composite support structure 13" or the "pre-cured fiber reinforced composite support structure 13".

Preferably, the inner support structure 13 is pre-cured as an integral one-piece fiber reinforced composite structure. However, manufacturing of pre-cured fiber reinforced composite structures is generally well-known in the art and, as such, not part of the present invention. Accordingly, manufacturing of the inner support structure 13 is not described in detail, for simplicity and brevity.

Similar to the horizontal stabilizer 8 of Figure 2 and Figure 3 as a whole, the support structure 13 illustratively comprises a flat area 14c that merges at the at least one and, by way of example, the two associated transition areas 14d, 14e according to Figure 2 and Figure 3 into at least one and, by way of example, two annexed curved areas 14a, 14b. It is understood that the flat area 14c of the support structure 13 may correspond to the flat connection area 8c of the horizontal stabilizer 8, that the annexed curved area 14a of the support structure 13 may correspond to the annexed curved lateral area 8a of the horizontal stabilizer 8, and that the annexed curved area 14b of the support structure 13 may correspond to the annexed curved lateral area 8b of the horizontal stabilizer 8.

Preferably, the inner support structure 13 is created to embody a load carrying structure in the horizontal stabilizer 8 of Figure 2 and Figure 3. Therefore, the inner support structure 13 may comprise a plurality of spars 13a. If desired, the inner support structure 13 may further comprise a plurality of ribs 13b.

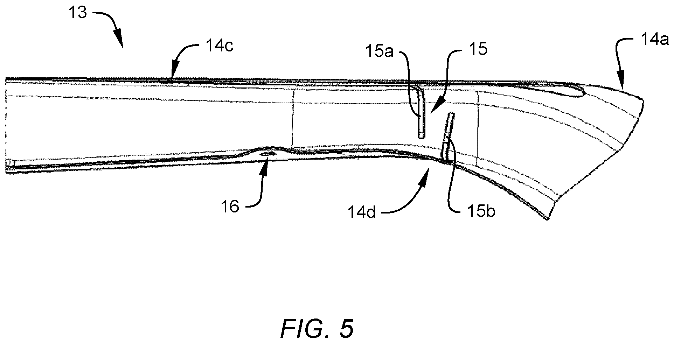

Figure 5 shows the associated transition area 14d of the inner support structure 13 of Figure 4. The inner support structure 13 comprises the flat area 14c which merges into the annexed curved area 14a at the associated transition area 14d.

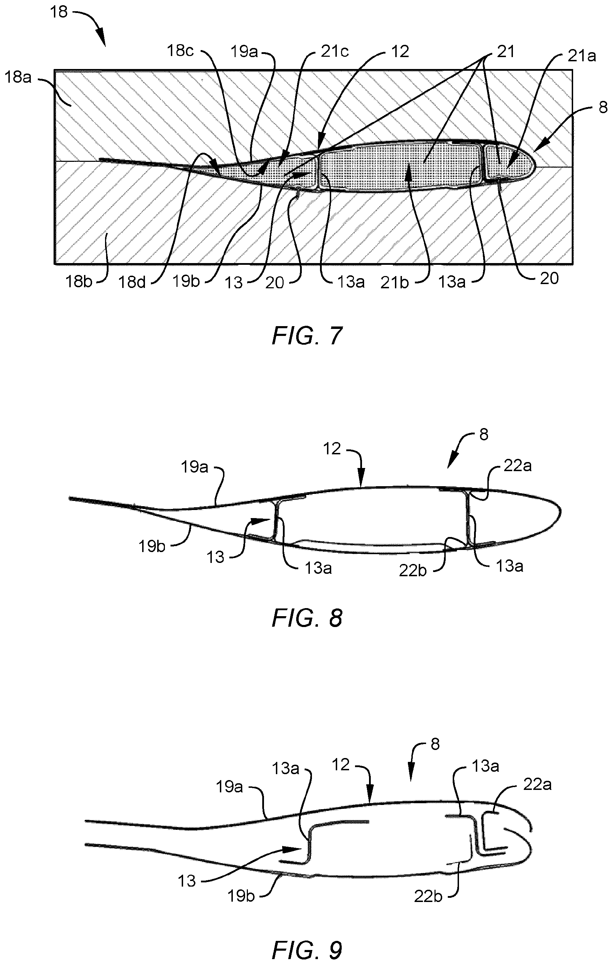

According to the present invention, the inner support structure 13 comprises at least one and, illustratively, two slots 15 in the at least one associated transition area 14d. Each one of the two slots 15 provides bending flexibility in the associated transition area 14d of the inner support structure 13 during manufacturing of the horizontal stabilizer 8 of Figure 2 and Figure 3, as described in more detail with reference to Figure 7. By way of example, the two slots 15 are formed in at least one of the plurality of spars 13a of Figure 4.

Illustratively, the two slots 15 comprise an upper slot 15a which is e. g. formed on the spar 13a of Figure 4 with an opening facing upwards, and a lower slot 15b which is e. g. formed on the spar 13a with an opening facing downwards. By way of example, the upper slot 15a and the lower slot 15b are spaced apart from each other on the spar 13a in the length direction of the inner support structure 13. A respective spacing between the upper slot 15a and the lower slot 15b is preferably greater than a slot width of either one of the upper slot 15a and the lower slot 15b.

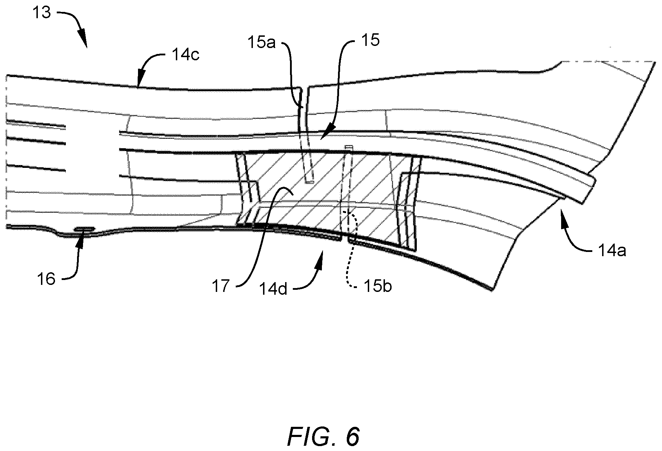

It is understood that two additional slots, preferably mirror-symmetric to the two slots 15, may be formed in the transition area 14e of Figure 4 in order to provide bending flexibility to the transition area 14e where the flat area 14c merges according to Figure 4 into the annexed curved area 14b. However, for purposes of simplicity and clarity, only the transition area 14d which is associated with the annexed curved area 14a and with the two slots 15 is described in detail in Figure 5 and Figure 6 representative for both transition areas 14d and 14e.

Furthermore, as shown in Figure 5, the flat area 14c may be provided with one or more long holes 16 for engagement with a plurality of positioning pins (e. g., positioning pins 20 of Figure 7) in a blow molding tool (e. g. 18 in Figure 7) during manufacturing of the horizontal stabilizer 8 of Figure 2 and Figure 3 for securing the inner support structure 13 against movement during a respective co-bonding process performed during the method of manufacturing the horizontal stabilizer 8, as described below at Figure 7.

Figure 6 shows the associated transition area 14d of the inner support structure 13 of Figure 4 and Figure 5 in greater detail, prior to a respective co-bonding process. The inner support structure 13 comprises the flat area 14c which illustratively comprises the one or more long holes 16 and merges into the annexed curved area 14a at the associated transition area 14d which is provided with the slots 15a, 15b.

Illustratively, the slots 15a, 15b in the associated transition area 14d of the support structure 13 are covered with wet covering fiber layers, i. e., fiber reinforced stiffening layers 17. Advantageously, the fiber reinforced stiffening layers 17 stiffen the associated transition area 14d of the support structure 13 after termination of the respective co-bonding process as they are hardened during curing, as described hereinafter with reference to Figure 7.

Figure 7 shows a method of manufacturing a fiber reinforced composite component according to the present invention. The fiber reinforced composite component which is manufactured is, by way of example, the horizontal stabilizer 8 of Figure 2 and Figure 3 with the inner support structure 13 of Figure 4 to Figure 6 and the aerodynamic outer skin 12 of Figure 3.

More specifically, according to the present invention the method of manufacturing the fiber reinforced composite component, i. e. the horizontal stabilizer 8, comprises providing a pre-cured fiber reinforced composite support structure, i. e. the inner support structure 13, providing at least one uncured fiber reinforced composite element, such as a pre-preg element which is to be cured, i. e. the aerodynamic outer skin 12, and joining the at least one uncured fiber reinforced composite element, i. e. the aerodynamic outer skin 12, to the pre-cured fiber reinforced composite support structure, i. e. the inner support structure 13 by means of a co-bonding process. As described above at Figure 4, the pre-cured fiber reinforced composite support structure, i. e. the inner support structure 13, comprises the flat area 14c that merges at at least one associated transition area 14d, 14e into at least one annexed curved area 14a, 14b, and the at least one associated transition area 14d, 14e comprises at least one slot 15a, 15b adapted to provide bending flexibility to the at least one transition area 14d, 14e.

In some implementations, the at least one uncured fiber reinforced composite element may only forms a portion of the aerodynamic outer skin 12 of the fiber reinforced composite component which is to be manufactured, i. e. the horizontal stabilizer 8. For instance, the at least one uncured fiber reinforced composite element may form an upper skin 19a and/or a lower skin 19b.

Preferably, joining the at least one uncured fiber reinforced composite element, i. e. the aerodynamic outer skin 12, to the pre-cured fiber reinforced composite support structure, i. e. the inner support structure 13, by means of the co-bonding process may comprise one or more of the following steps: providing a blow molding tool 18, positioning the at least one uncured fiber reinforced composite element, i. e. the aerodynamic outer skin 12 and, more particularly, one or both of the upper skin 19a or the lower skin 19b, in the blow molding tool 18, positioning the pre-cured fiber reinforced composite support structure, i. e. the inner support structure 13, in the blow molding tool 18, and heating the blow molding tool 18 for curing the pre-cured fiber reinforced composite support structure, i. e. the inner support structure 13, and the at least one uncured fiber reinforced composite element, i. e. the aerodynamic outer skin 12 and, more particularly, one or both of the upper skin 19a or the lower skin 19b, in the blow molding tool 18.

Illustratively, providing the blow molding tool 18 comprises providing a first tool half 18a with a first cavity 18c and a second tool half 18b with a second cavity 18d. Both, the first tool half 18a and the second tool half 18b are preferably metallic structures. Thus, positioning the at least one uncured fiber reinforced composite element, i. e. the aerodynamic outer skin 12 and, more particularly, one or both of the upper skin 19a or the lower skin 19b, in the blow molding tool 18 may comprise positioning the upper skin 19a in the first cavity 18c of the first tool half 18a and/or positioning the lower skin 19b in the second cavity 18d of the second tool half 18b. Positioning the upper skin 19a in the first cavity 18c of the first tool half 18a and/or positioning the lower skin 19b in the second cavity 18d of the second tool half 18b may comprise lining one or both of the upper skin 19a and the lower skin 19b with wet fiber layers, i. e. fiber layers which are wetted with resin. The pre-cured fiber reinforced composite support structure, i. e. the inner support structure 13, may then e. g. be positioned in the second cavity 18d of the second tool half 18b, i. e. on the lower skin 19b which is lined with wet fiber layers.

Preferably, the second cavity 18d of the second tool half 18b of the blow molding tool 18 is shaped to comprise contours corresponding to the shapes of the (downward-bending) winglets 9 of Figure 2 and Figure 3, as well as contours corresponding to the shapes of the position light housings 10a, 10b of Figure 2 and Figure 3, respectively. More generally, at least the second cavity 18d of the second tool half 18b of the blow molding tool 18 may be shaped for being suitable to accommodate curved areas of the fiber reinforced composite component which is to be manufactured with the blow molding tool 18.

Furthermore, as described above at Figure 6, positioning the pre-cured fiber reinforced composite support structure, i. e. the inner support structure 13, in the blow molding tool 18 may comprise covering the at least one slot 15a, 15b of the at least one associated transition area 14d, 14e of the pre-cured fiber reinforced composite support structure, i. e. the inner support structure 13, one or more fiber reinforced stiffening layers (17 in Figure 6), i. e. with wet covering fiber layers. By way of example, the upper slot 15a and the lower slot 15b in the associated transition area 14d of the inner support structure 13 may be covered with wetted fiber layers in the above-described process step in order to stiffen the temporarily flexible area once the whole assembly of the horizontal stabilizer 8 has been cured.

Advantageously, a significant thermal expanding of the blow molding tool 18 with the preferably metallic first and second tool halves 18a, 18b during the co-bonding process, especially in the length direction 11 of Figure 3 of the fiber reinforced composite component which is to be manufactured, i. e. the horizontal stabilizer 8, , will be counteracted by the temporarily flexible area provided by the slots 15 in the pre-cured fiber reinforced composite support structure, i. e. the inner support structure 13. Thus, the blow molding tool 18 will not cause significant tensions and/or distortions to the pre-cured fiber reinforced composite support structure, i. e. the inner support structure 13, during the curing, i. e. the co-bonding process. Furthermore, no tensions and/or distortions will remain after the co-bonding process in the fully hardened horizontal stabilizer 8.

In some implementations, positioning the pre-cured fiber reinforced composite support structure, i. e. the inner support structure 13, on the lower skin 19b in the second cavity 18d of the second tool half 18b may comprise fixing position of the pre-cured fiber reinforced composite support structure, i. e. the inner support structure 13, in the second cavity 18d using a plurality of positioning pins 20. More specifically, to ensure that the pre-cured fiber reinforced composite support structure, i. e. the inner support structure 13, remains in position in the blow molding tool 18 during the curing, i. e. co-bonding process, the pre-cured fiber reinforced composite support structure, i. e. the inner support structure 13, is preferably secured against movement in the blow molding tool 18 using locking pins 20.

It is understood that the term "fixing position" means to substantially fix a relative position between the pre-cured fiber reinforced composite support structure, i. e. the inner support structure 13, and the blow molding tool 18. Comparatively small displacements within a predetermined manufacturing tolerance may, however, still be allowed by the positioning pins 20.

As described above at Figure 5 and Figure 6, a tap with an elongated hole, i. e. the long hole 16 of Figure 5 and Figure 6, may be formed in the pre-cured fiber reinforced composite support structure, i. e. the inner support structure 13. By way of example, the locking pin 20 may be inserted into the long hole 16 of the pre-cured fiber reinforced composite support structure, i. e. the inner support structure 13, and then fixed to the blow molding tool 18. It is understood that a "long hole" is a hole whose length is greater than its width. In this way, an element, such as a pin, inserted into the long hole may be allowed to have limited movement in the direction of the length of the long hole without loss of an essential function of restricting the movement of the part possessing the long hole.

In some implementations, providing the pre-cured fiber reinforced composite support structure, i. e. the inner support structure 13, may comprise providing its flat area 14c with a plurality of long holes 16 for engagement with the plurality of positioning pins 20 such that movement of the plurality of positioning pins 20 in the plurality of long holes 16 relative to the pre-cured fiber reinforced composite support structure, i. e. the inner support structure 13, during the co-bonding process is enabled. The elongated holes 16 may allow a relative movement of the blow molding tool 18 with respect to the pre-cured fiber reinforced composite support structure, i. e. the inner support structure 13, which is due to the thermal expansion of the blow molding tool 18, thereby avoiding tensions between the positioning pins 20 and the pre-cured fiber reinforced composite support structure, i. e. the inner support structure 13, thus, avoiding damaging the pre-cured fiber reinforced composite support structure, i. e. the inner support structure 13, during heating in the co-bonding process.

If desired, positioning the pre-cured fiber reinforced composite support structure, i. e. the inner support structure 13, on the lower skin 19b in the second cavity 18d of the second tool half 18b may further comprise positioning inflatable blow tubes 21 in tube spaces 21a, 21b, 21c created by the pre-cured fiber reinforced composite support structure, i. e. the inner support structure 13, in the blow molding tool 18. By way of example, the inflatable blow tubes 21 may be inserted between the ribs 13b of the inner support structure 13 prior to assembling, i. e. attaching the upper tool half 18a and the lower tool half 18b to each other. As illustrated, the upper tool half 18a of the blow molding tool 18 is placed on the lower tool half 18b of the blow molding tool 18 and preferably screwed thereon or otherwise secured against shifting.

Illustratively, the inflatable blow tubes 21 may be inflated and, thus, fix the desired shape of the fiber reinforced composite component, i. e. the horizontal stabilizer 8 which is to be manufactured, in the blow molding tool 18. In this state, the blow molding tool 18 may be then heated in an oven or autoclave to harden the resin of all wetted resin layers.

Figure 8 shows the horizontal stabilizer 8 which is manufactured as a fiber reinforced composite component, as described above at Figure 7. The horizontal stabilizer 8 comprises the inner support structure 13 with the spars 13a and the aerodynamic outer skin 12 with the upper skin 19a and the lower skin 19b. The spars 13a are partially provided with one or more fiber reinforced stiffening layers (17 in Figure 6), i. e. with wet covering fiber layers or cover plies which cover the slots 15 of Figure 5 and Figure 6. Illustratively, a cover ply 22a covers the upper slot (15a in Figure 5 and Figure 6) and a cover ply 22b covers the lower slot 15b (15b in Figure 5 and Figure 6).

Figure 9 shows the horizontal stabilizer 8 of Figure 8 for further illustrating the arrangement of the cover plies 22a, 22b on the spar 13a.

Finally, it should be noted that modifications to the above-described embodiments are within the common knowledge of the person skilled in the art and, thus, also considered as being part of the present invention. For instance, according to Figure 5 one upper slot 15a and one lower slot 15b are provided on the spars 13a in the transition area 14d of the inner support structure 13. However, if desired, at least one additional upper slot 15a and/or at least one additional lower slot 15b may be provided in the transition area 14d.

### Reference List

- 1: rotorcraft
- 1a: multi-blade main rotor
- 1b, 1c: rotor blades
- 1d: rotor head
- 1e: rotor shaft
- 1f: landing gear
- 2: fuselage
- 2a: cockpit
- 2b: rear fuselage
- 3: tail boom
- 3a: tail boom cone
- 4: counter-torque device
- 4a: tail rotor
- 5: fin
- 6: engines
- 7: portside engine
- 8: horizontal stabilizer
- 8a, 8b: curved lateral areas
- 8c: flat connection area
- 9: winglets
- 9a: portside winglet
- 9b: starboard side winglet
- 10: position lights
- 10a, 10b: position light housings
- 11: length direction
- 12: aerodynamic outer skin
- 13: inner support structure
- 13a: spars
- 13b: ribs
- 14a, 14b: annexed curved areas
- 14c: flat area
- 14d, 14e: transition areas
- 15: slots
- 15a: upper slot
- 15b: lower slot
- 16: long hole
- 17: fiber reinforced stiffening layer
- 18: blow molding tool
- 18a: upper tool half
- 18b: lower tool half
- 18c, 18d: tool cavities
- 19a: upper skin with wet fiber layers
- 19b: lower skin with wet fiber layers
- 20: positioning pins
- 21: inflatable blow tubes
- 21a, 21b, 21c: tube spaces
- 22a: cover ply upper slot
- 22b: cover ply lower slot

## Claims

1. A method of manufacturing a fiber reinforced composite component, comprising:
providing a pre-cured fiber reinforced composite support structure (13) which comprises a flat area (14c) that merges at at least one associated transition area (14d, 14e) into at least one annexed curved area (14a, 14b), wherein the at least one associated transition area (14d, 14e) comprises at least one slot (15a, 15b) adapted to provide bending flexibility to the at least one transition area (14d, 14e);
providing at least one uncured fiber reinforced composite element (19a); and
joining the at least one uncured fiber reinforced composite element (19a) to the pre-cured fiber reinforced composite support structure (13) by means of a co-bonding process.

2. The method of claim 1, wherein the pre-cured fiber reinforced composite support structure (13) forms a load carrying structure of a horizontal stabilizer (8) of a rotorcraft (1) and comprises a plurality of spars (13a) and a plurality of ribs (13b), wherein the at least one slot (15a, 15b) is formed in at least one of the plurality of spars (13a); and wherein the at least one uncured fiber reinforced composite element (19a) forms at least a portion of an outer skin of the horizontal stabilizer (8).

3. The method of claim 1 or 2, wherein joining the at least one uncured fiber reinforced composite element (19a) to the pre-cured fiber reinforced composite support structure (13) by means of the co-bonding process comprises:
providing a blow molding tool (18);
positioning the at least one uncured fiber reinforced composite element (19a) in the blow molding tool (18);
positioning the pre-cured fiber reinforced composite support structure (13) in the blow molding tool (18); and
heating the blow molding tool (18) for curing the pre-cured fiber reinforced composite support structure (13) and the at least one uncured fiber reinforced composite element (19a) in the blow molding tool (18).

4. The method of claim 3, wherein providing the blow molding tool (18) comprises providing a first tool half (18a) with a first cavity (18c) and a second tool half (18b) with a second cavity (18d); wherein positioning the at least one uncured fiber reinforced composite element (19a) in the blow molding tool (18) comprises positioning the at least one uncured fiber reinforced composite element (19a) in the first cavity (18c) of the first tool half (18a); and wherein positioning the pre-cured fiber reinforced composite support structure (13) in the blow molding tool (18) comprises positioning the pre-cured fiber reinforced composite support structure (13) in the second cavity (18d) of the second tool half (18b).

5. The method of claim 4, wherein positioning the at least one uncured fiber reinforced composite element (19a) in the first cavity (18c) of the first tool half (18a) comprises lining the at least one uncured fiber reinforced composite element (19a) with wet fiber layers.

6. The method of claim 4 or 5, wherein positioning the pre-cured fiber reinforced composite support structure (13) in the second cavity (18d) of the second tool half (18b) comprises:
providing at least one additional uncured fiber reinforced composite element (19b);
positioning the at least one additional uncured fiber reinforced composite element (19b) in the second cavity (18d) of the second tool half (18b); and
positioning the pre-cured fiber reinforced composite support structure (13) on the at least one additional uncured fiber reinforced composite element (19b) in the second cavity (18d) of the second tool half (18b).

7. The method of claim 6, wherein positioning the at least one additional uncured fiber reinforced composite element (19b) in the second cavity (18d) of the second tool half (18b) comprises lining the at least one additional uncured fiber reinforced composite element (19b) with additional wet fiber layers.

8. The method of any one of claims 3 to 7, wherein positioning the pre-cured fiber reinforced composite support structure (13) in the blow molding tool (18) comprises covering the at least one slot (15a, 15b) of the at least one associated transition area (14d, 14e) of the pre-cured fiber reinforced composite support structure (13) with wet covering fiber layers.

9. The method of any one of claims 6 to 8, wherein positioning the pre-cured fiber reinforced composite support structure (13) on the at least one additional uncured fiber reinforced composite element (19b) in the second cavity (18d) of the second tool half (18b) comprises fixing position of the pre-cured fiber reinforced composite support structure (13) in the second cavity (18d) using a plurality of positioning pins (20); and positioning inflatable blow tubes (21) in tube spaces (21a, 21b, 21c) created by the pre-cured fiber reinforced composite support structure (13) in the blow molding tool (18).

10. The method of claim 9, wherein providing the pre-cured fiber reinforced composite support structure (13) comprises providing the flat area (14c) with a plurality of long holes (16) for engagement with the plurality of positioning pins (20) such that movement of the plurality of positioning pins (20) in the plurality of long holes (16) relative to the pre-cured fiber reinforced composite support structure (13) during the co-bonding process is enabled.

11. The method of claim 2 with any one of claims 5 to 10, wherein the at least one additional uncured fiber reinforced composite element (19b) forms at least another portion of the outer skin of the horizontal stabilizer (8).

12. The method of claim 2 with any one of claims 5 to 11, wherein the at least one annexed curved area (14a, 14b) forms at least one winglet of the horizontal stabilizer (8).

13. A horizontal stabilizer (8) of a rotorcraft (1), comprising a fiber reinforced composite support structure (13) and a fiber reinforced composite element (19a, 19b), wherein the fiber reinforced composite support structure (13) comprises a flat area (14c) that merges at at least one associated transition area (14d, 14e) into at least one annexed curved area (14a, 14b), wherein the at least one associated transition area (14d, 14e) comprises at least one slot (15a, 15b), and wherein the fiber reinforced composite element (19a, 19b) forms an outer skin that envelops the fiber reinforced composite support structure (13).

14. The horizontal stabilizer (8) of claim 13, which is manufactured using the method of any one of claims 1 to 12.

15. A rotorcraft (1) with a horizontal stabilizer (8) which is manufactured using the method of any one of claims 1 to 12.
